# EUROPÄISCHE PATENTANMELDUNG

(11) **EP 0 599 154 A1**
(43) Veröffentlichungstag der Anmeldung: **01.06.1994**
(21) Anmeldenummer: 93118332.1
(22) Anmeldetag: 12.11.1993
(51) Int. Cl.: G02B 26/02, G02B 26/08

(54) **Modulator für einen Lichtstrahl**

(30) Priorität: 20.11.1992 CH 3567/92
(71) Anmelder: ASCOM TECH AG, CH-3018 Bern (CH)
(72) Erfinder: Bättig, Rainer, CH-3012 Bern (CH); Vogel, Paul, Dr., CH-3612 Steffisburg (CH)
(74) Vertreter: Schwerdtel, Eberhard, Dr.

(57) **Zusammenfassung**

Der Modulator (11) dient zum Modulieren der Intensität eines Lichtstrahls, der aus einer Lichtleitfaser (13) kegelförmig austritt. Hierzu besitzt der Modulator einen Spiegel (19), der in wenigstens zwei unterschiedliche, geometrische Zustände bringbar ist. Im einen dieser (minimal) zwei Zustände (a) ist der Spiegel (19) beispielsweise plan und das Licht divergiert nach der Reflexion so, dass nur ein geringer Anteil zurück in die Faser (13) gelangt. In einem anderen dieser Zustände (b) ist der Spiegel dagegen konkav so gebogen und angeordnet, dass durch Spiegelung in sich selbst zurück ein grosser Teil des Lichts zurück in die Faser (13) gelangt.

Der Spiegel (19) ist als geätzte Halbleiterfolie ausgebildet und verbiegt sich unter der Kraft eines variablen, elektrostatischen Feldes zwischen der Folie und einer Elektrode (24), die auf einem Träger (22) aufgebracht ist.

## Beschreibung

Die Erfindung betrifft einen Modulator für einen Lichtstrahl entsprechend dem Oberbegriff von Anspruch 1.

Aus der Schrift DE 40 31 970 A1 ist ein optischer Reflexionsmodulator bekannt. Bei diesem trifft das aus dem stumpfen Ende einer Lichtleitfaser austretende Licht auf einen orthogonal zur Faser angeordneten Spiegel. Dieser Spiegel wirft das Licht in sich zurück, wobei in Art eines Fabry-Perot-Resonators eine stehende Welle zwischen dem spiegelnden Faserende und dem Spiegel auftritt, sofern deren Abstand dem Vielfachen einer halben Wellenlänge des verwendeten Lichts entspricht. Durch Verändern des genannten Abstandes, insbesondere durch Verschiebung des Spiegels, lässt sich der Fabry-Perot-Resonator verstimmen und damit die Lichtstärke verändern.

Der beschriebene Modulator ist im Aufbau relativ einfach und besitzt gute Modulationseigenschaften. Er ist jedoch vom absoluten Wert des Abstandes zwischen dem Faserende und dem Spiegel abhängig, der sich durch mancherlei Einflüsse verändert, z.B. in Abhängigkeit vom der Temperatur. Es muss daher ein Regler vorgesehen werden, der den "optischen Abstand" konstant hält.

Ausgehend von diesem Stand der Technik ist es die Aufgabe der Erfindung, einen Lichtmodulator anzugeben, der vergleichbare Modulationseigenschaften aufweist, jedoch unabhängig von der genannten Problematik einer konstant zu haltenden Länge ist.

Diese Aufgabe wird durch den kennzeichnenden Teil des Anspruchs 1 gelöst. Die abhängigen Ansprüche geben Ausgestaltungen der Erfindung an.

Die genannte Lösung zeichnet sich durch besondere Einfachkeit aus und arbeitet sehr empfindlich. Sie bildet damit einem hervorragenden Modulator der Gattung der optischen Reflexionsmodulatoren mit mechanisch bewegten Spiegelflächen.

Im folgenden wird die Erfindung anhand von zwei Figuren beispielsweise näher beschrieben. Diese zeigen schematische Ansichten eines ersten und zweiten Modulators.

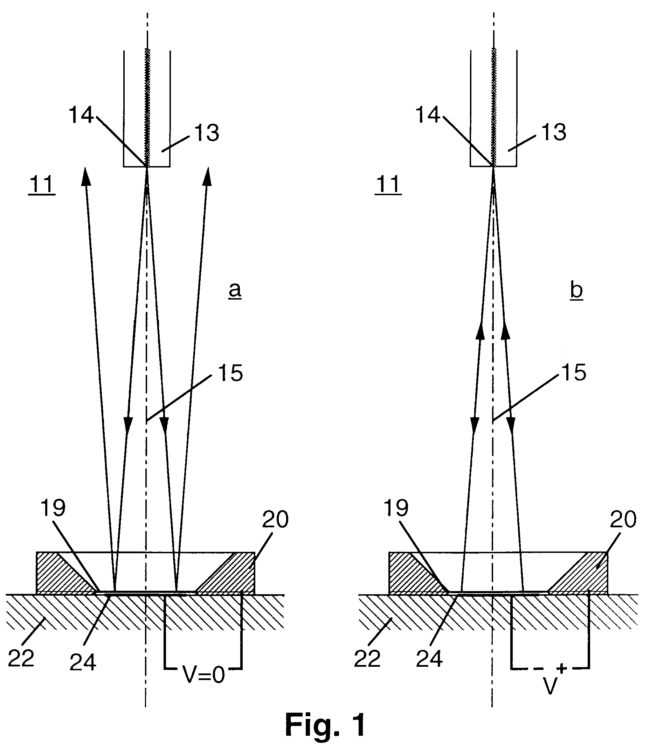

Fig. 1 zeigt eine prinzipielle, optische Seitenansicht eines ersten Modulators 11 in zwei unterschiedlichen Zuständen (a) und (b). Das Licht erreicht die Anordnung über eine Lichtleitfaser 13, z.B. eine Monomode-Glasfaser. Am Ende der Faser 13 tritt das Licht an einer Lichtaustrittstelle 14 aus, weitet sich in bekannter Weise kegelförmig auf und erreicht einen Spiegel 19. Dieser Spiegel 19 ist als gut reflektierende Folie ausgebildet, die z.B. kreisförmig in einer Halterung 20 stramm eingespannt ist. Die Reflexionseigenschaft wird bevorzugt durch eine metallische Aufdampfschicht bewirkt.

Die Spiegelfolie kann nun z.B. plan sein (Fig. 1a) oder - gesehen aus der Richtung des Lichtstrahls - konkav (Fig. 1b). Dies entspricht zwei unterschiedlichen, geometrischen Zuständen des Spiegels 19.

Ist der Spiegel 19 mit seiner Oberfläche plan (Fig. 1a), dann divergiert das reflektierte Licht und es trifft nur ein minimaler Bruchteil dieses Lichtes wieder auf die Lichtaustrittstelle 14. Der rückwärts gerichtete Lichtfluss in die Lichtleitfaser 13 ist damit äusserst gering.

Ist der Spiegel (19) mit seiner Oberfläche dagegen - gesehen aus der Richtung des Lichtstrahls - konkav gebogen (Fig. 1b), d.h. besitzt er insbesondere die Form einer Kugelkalotte, und fällt deren Kugelmittelpunkt mit der Lichtaustrittstelle 14 der Lichtleitfaser 13 zusammen, dann wird jeder Teilstrahl exakt in sich selbst zurückgespiegelt. Es trifft damit der Grossteil des reflektierten Lichtes wieder die Stelle 14 und kann damit wieder in die Lichtleitfaser 13 eintreten. Der rückwärts gerichtete Lichtfluss in der Faser 13 ist damit gross.

Durch den Wechsel zwischen den genannten zwei geometrischen Zuständen des Spiegels 19 lässt sich eine duale Modulation bzw. eine Intensitäts-Umschaltung hell/dunkel des reflektierten Lichtstrahls durchführen. Es ist jedoch auch möglich, durch Einstellen beliebiger geometrischer Zwischenstellungen eine analoge Intensitätsmodulation vorzunehmen.

Zum Einstellen der verschiedenen geometrischen Zustände besitzt der Modulator 11 einen Träger 22, der mit seiner als Elektrode 24 ausgebildeten Oberfläche nahe, jedoch nicht berührend, parallel zur Spiegelfolie angeordnet ist. Die metallische Spiegelschicht und die Elektrode 24 bilden nun zusammen einen plattenförmigen Kondensator. Dieser Kondensator lässt sich auf verschiedene Weise elektrisch laden, wobei elektrostatische Kräfte zwischen dem Träger 22 und dem Spiegel 19 auftreten. Diese Kräfte bewirken ein sphärisches Wölben der Spiegelfolie. Dies bedeutet, dass der Spiegel 19 statt seiner planen Form eine Kalottenform annimmt. Die genannte - gesehen aus der Richtung des Lichtstrahls - konkave Form wird erreicht, wenn der Spiegel 19 und die Elektrode 24 auf unterschiedlichem Potential liegen, d.h. wenn zwischen ihnen eine elektrische Spannung herrscht. Diese zieht den Spiegel 19 in Richtung des Trägers 22. Liegen der Spiegel 19 und die Elektrode 24 dagegen auf dem gleichen Potential, dann ergibt sich eine elektrostatische Abstossung, die den Spiegel 19 konvex in Richtung des Lichtstrahles aufwölbt.

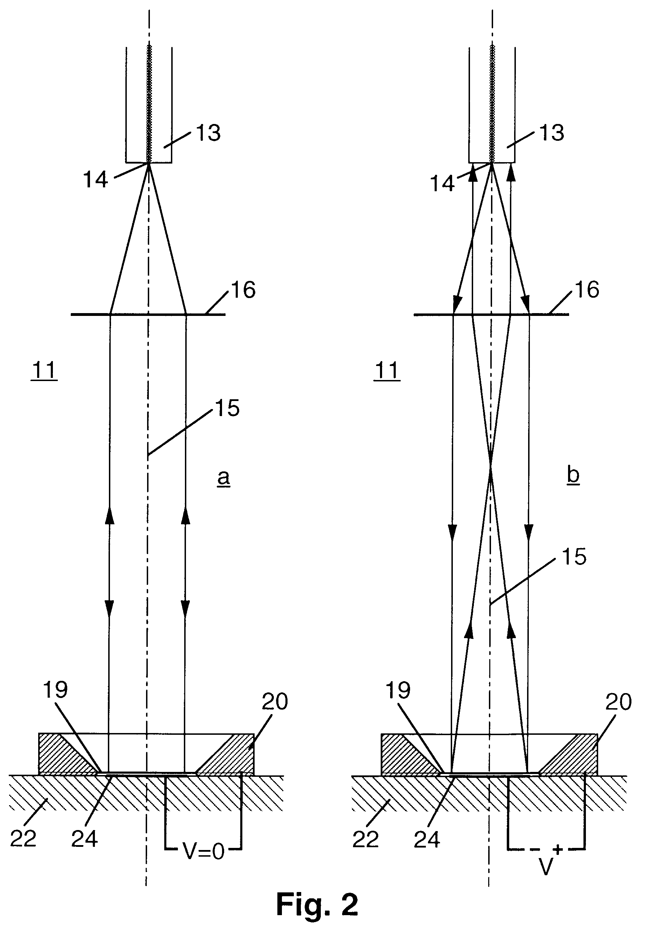

Fig. 2 zeigt mit seinen beiden Teilabbildungen (a) und (b) einen zweiten Modulator 11. Dieser weist im Unterschied zum ersten Modulator entsprechend der Fig. 1 eine Sammellinse 16 auf. Diese ist zwischen der Lichtleitfaser 13 und dem Spiegel 19 angeordnet, und zwar so, dass sie symmetrisch zur optischen Achse 15 der Anordnung liegt und ihr einer Brennpunkt mit der Lichtaustrittstelle 14 der Faser 13 zusammenfällt. Die Linse 16 bewirkt eine Parallelisierung des aus der Faser 13 divergierend austretenden Lichtstrahls. Dieser parallele Lichtstrahl trifft orthogonal auf den Spiegel 19.

Besitzt dieser Spiegel 19 entsprechend Fig. 2a eine plane Spiegelfläche, dann wird der auftreffende Lichtstrahl durch die Reflexion vollständig in sich zurückgespiegelt. Er tritt damit im wesentlichen unabgeschwächt in Rückwärtsrichtung wieder in die Lichtleitfaser 13 ein. Besitzt der Spiegel 19 dagegen eine - gesehen aus der Strahlrichtung - konkav gewölbte Oberfläche, dann konvergiert der reflektierte Lichtstrahl. Er erreicht die Lichtleitfaser 13 irgendwie, wobei dieses "irgendwie" von den Dimensionen und den Gesetzen der geometrischen Optik bestimmt wird. In jedem Fall tritt jedoch nur ein geringer Bruchteil des austretenden Lichtes wieder in die Lichtleitfaser 13 ein.

Prinzipiell ist der erfindungsgemässe Modulator 11 dadurch gekennzeichnet, dass er einen flexiblen, in sich selbst verformbaren Spiegel 19 besitzt. Dieser Spiegel lässt sich nun in wenigstens zwei unterschiedliche geometrische Zustände bringen. Im einen dieser Zustände wird das aus der Lichtleitfaser 13 austretende Licht nach den Gesetzen der geometrischen Optik weitgehend vollständig in diese Faser zurückgespiegelt. Im anderen dieser Zustände wird das Licht dagegen vorwiegend so verteilt, dass nur ein geringerer Anteil dieses Lichtes zurück in die Lichtleitfaser 13 gelangt. Die unterschiedlichen geometrischen Zustände entsprechen dabei im wesentlichen Kugelkalotten mit unterschiedlichen Biegeradien. Im wichtigen Sonderfall bei unendlich grossem Biegeradius ist der Spiegel 19 eben.

Der Modulator 11 ist in der Wirkungsweise sehr einfach und basiert neben der genannten inneren Verformbarkeit des Spiegels 19 auf den an sich bekannten Gesetzen der geometrischen Optik. Hierdurch sind neben den beschriebenen Ausführungsbeispielen ohne Probleme weitere erfindungsgemässe Varianten angebbar, Hierzu kann z.B. paarweise bestimmt werden, welche geometrischen Formen plan, schwach konkav, stark konkav, konvex usw. der Spiegel 19 annehmen soll und welche Zustände diesen Formen zugeordnet sein sollen. Hierbei gibt es keine speziell kritischen, optischen Abstände oder Masse.

Es ist nun vorteilhaft, die Spiegelfolie als geätzte Membran herzustellen. Derartige Membranen lassen sich durch gezieltes Ätzen von dotierten Halbleitern, z.B. Silizium-Einkristall-Scheiben mit geeigneten pn-Dotierungsschichten, relativ problemlos herstellen. Durch Aufdampfen metallischer Schichten lassen sich sodann sowohl die Spiegeleigenschaften als auch die Elektrode zum Anlegen der elektrostatischen Spannung erzeugen, die die Formveränderung des Spiegels 19 bewirkt. Es ist damit preiswert möglich, sehr kleine und kompakte Modulatoren 11 herzustellen, die bis in den MHz-Bereich zuverlässig arbeiten. Die Ansteuerung dieser Modulatoren 11 erfordert nur relativ niedrige Spannungen und kaum Strom.

Es ist weiter auch möglich, auf der Folie eine integrierte, gedruckte Spule vorzusehen, über die ein Steuerstrom flissen kann. Weiter sind piezoelektrische Materialien als Basis für eine elektrisch gesteuerte Auslenkung des Spiegels 19 einsetzbar. Neben den bisher beschriebenen elektrisch nichtleitenden, metallisch bedampften Folien kann auch eine reine Metallfolie als Spiegel 19 vorgesehen werden.

Die bisher beschriebenen Modulatoren 11 basieren auf einer Reflexion des aus der Lichtleitfaser 13 austretenden Lichtes zurück in diese Faser. Sie sind damit Reflexions-Modulatoren. Es ist jedoch ohne weiteres möglich durch geringfügige Abänderung der optischen Verhältnisse die Reflexion zurück in eine zweite, bisher nicht erwähnte Lichtleitfaser zu bewirken. In diesem Fall kann ein von der einen zur anderen Lichtleitfaser durchlaufender Lichstrahl moduliert bzw. digital "hell/dunkel" gesteuert werden.

## Patentansprüche

1. Modulator (11) zum Modulieren der Intensität eines Lichtstrahls, der aus einer Lichtleitfaser (13) aus- und in eine solche wieder eintritt,
mit einem Spiegel (19), der zum Zwecke des Modulierens elektromechanisch beeinflussbar ist,
dadurch gekennzeichnet,
dass der Spiegel (19) in sich selbst flexibel ausgebildet, in wenigstens zwei unterschiedliche, geometrische Zustände bringbar und in Bezug auf die Lichtaus- bzw. -eintittstelle (14) der Lichtleitfaser(n) (13) so angeordnet ist, dass bei jedem dieser Zustände ein anderer Anteil des ankommenden Lichts in eine abgehende Lichtleitfaser (13) eingespiegelt wird.

2. Modulator nach Anspruch 1,
dadurch gekennzeichnet,
dass eine einzige Lichtleitfaser (13) vorgesehen ist, in die das ankommende Licht zurückgespiegelt wird.

3. Modulator nach Anspruch 2,
dadurch gekennzeichnet,
dass der Spiegel (19) wenigstens in einem seiner unterschiedlichen Zustände in Art einer Kugelkalotte konkav gewölbt und so angeordnet ist, dass der Mittelpunkt der der Kalotte zugeordneten Kugel mit der Lichtaustrittstelle (14) der Lichtleitfaser (13) zusammenfällt.

4. Modulator nach Anspruch 2,
dadurch gekehnnzeichnet,
- dass eine Sammellinse (16) zwischen der Lichtleitfaser (13) und dem Spiegel (19) vorgesehen ist, deren einer Brennpunkt mit der Lichtaustrittstelle (14) der Lichtleitfaser (13) zusammenfällt, und
- dass der Spiegel (19) wenigstens in einem seiner unterschiedlichen Zustände eben und orthogonal zur optischen Achse (15) des Modulators ausgerichtet ist.

5. Modulator nach Anspruch 1,
dadurch gekennzeichnet,
- dass der Spiegel (19) als metallisch beschichtete, elektrisch nichtleitende Membran ausgebildet ist,
- dass der Membran ein mechanischer Träger (22) und eine Steuerelektrode ( 24) zugeordnet sind, und
- dass an die Membran und die Steuerelektrode (24) eine elektrische Steuerspannung anlegbar ist.

6. Modulator nach Anspruch 1,
dadurch gekennzeichnet,
- dass der Spiegel (19) als metallisch beschichtete, elektrisch nichtleitende Membran ausgebildet und mit einer Steuerwicklung versehen ist,
- dass der Membran ein mechanischer Träger (22) und ein magnetisches Element zugeordnet sind, und
- dass die Membran über die Steuerwicklung durch einen elektrischen Steuerstrom ansteuerbar ist.

7. Modulator nach Anspruch 5 oder 6,
dadurch gekennzeichnet,
dass die Membran ein geätztes Halbleiter-Element ist.

8. Modulator nach Anspruch 1,
dadurch gekennzeichnet,
dass der Spiegel (19) als Membran ausgebildet ist, die über ein piezoelektrisches Material elektrisch ansteuerbar ist.
